# EUROPÄISCHE PATENTSCHRIFT

(11) **EP 1 321 598 B1**
(45) Veröffentlichungstag und Bekanntmachung des Hinweises auf die Patenterteilung: **27.03.2013**
(21) Anmeldenummer: 02028548.2
(22) Anmeldetag: 20.12.2002
(51) Int. Cl.: E04C 2/12, B27M 3/00, B32B 7/08, B32B 21/13, B27K 5/00

(54) **Verbundbauteil**
Composite component
Elément composite

(30) Priorität: 21.12.2001 DE 10163446
(43) Veröffentlichungstag der Anmeldung: 25.06.2003
(73) Patentinhaber: Hundegger, Hans, 87749 Hawangen (DE)
(72) Erfinder: Hundegger, Hans, 87749 Hawangen (DE)
(74) Vertreter: Rapp, Bertram

(56) Entgegenhaltungen:
- WO-A-00/03850
- WO-A1-02/088483
- DE-A1- 2 014 404
- DE-A1- 2 016 260
- DE-A1- 4 326 620
- DE-A1- 10 163 446
- DE-A1- 19 603 833
- DE-A1- 19 840 683
- DE-U1- 20 208 773
- DE-U1- 29 721 848
- US-A- 5 547 325
- US-A1- 2 161 503
- US-A1- 3 399 445
- US-A1- 3 537 168
- US-A1- 4 897 291

## Beschreibung

Die Erfindung betrifft ein Verbundbauteil nach dem Oberbegriff des Anspruchs 1 und ein Verfahren zur Herstellung eines solchen Verbundbauteils.

Ein solches Verbundbauteils ist aus DE-A-196 03833 bekannt.

Verbundbauteile, die aus verschiedenen Lagen von beispielsweise Holz bestehen, sind als Sperrholzplatten bekannt, wobei verschiedene Schichten dieser Sperrholzplatten miteinander verleimt sind. Ebenfalls sind Leimbinder bekannt, die als Träger im Hausbau Verwendung finden und aus miteinander verleimten Pfosten oder Brettern bestehen.

Das Verbinden mit Leim hat jedoch den Nachteil, daß es relativ lange dauert, bis der Leim abbindet und die einzelnen Elemente miteinander fest verbunden sind. Während der Fertigung müssen die einzelnen Schichten beziehungsweise Elemente so lange zusammengepreßt werden, bis der Leim fest geworden ist.

Leim hat außerdem den weiteren Nachteil, daß er ausdünstet und gegebenenfalls schädliche Stoffe an die Umgebung abgibt.

Es ist deshalb bereits vorgeschlagen worden, die verschiedenen Schichten von Verbundbauteilen, insbesondere Verbundbauteile, die nur aus Holz bestehen, mit Holzdübeln miteinander zu verbinden. Hierzu wird die PCT WO 00/038 50 zitiert, bei der verschiedene Schichten von Holzelementen mit Dübeln aneinander befestigt werden. Zu diesem Zweck müssen in das Bauteil Löcher gebohrt werden, in die die Dübel einsetzbar sind. Dabei wird die Festigkeit zwischen Dübel und Holz dadurch erhöht, daß die Feuchtigkeit des Holzes in die sehr trockenen Dübel einzieht, sie quellen läßt und so eine unlösbare Verbindung zwischen den einzelnen Holzschichten geschaffen ist.

Der Vorschlag des Standes der Technik bietet zwar eine einstoffige Wand, jedoch ist der Aufwand beträchtlich. Nachdem die Bretter alle zu dem Verbundbauteil angeordnet sind, werden diese durchgängig gebohrt, um den Dübel einstecken zu können. Da die Bretter verrutschen können, muß der ganze Stapel aufwändig gehalten, fixiert oder gepreßt werden. Das behindert natürlich das Bohren. Das Einbringen des Bohrloches stellt aber auch einen zusätzlichen Aufwand dar, da es dafür eines zusätzlichen Bearbeitungsschrittes bedarf. Letztendlich ist der Einsatz eines getrockneten Dübels auch ein verhältnismäßig aufwendiger Verfahrensschritt, da sichergestellt werden muß, daß das zu verbindende Holz eine entsprechend höhere Feuchtigkeit aufweist. Im Ergebnis ist dieser Vorschlag in der Realisierung aufwändig und daher auch entsprechend teuer.

Des weiteren ist aus der deutschen Offenlegungsschrift 196 03 833 eine Holzbautafel bekannt, bei welcher die kreuzweise Anordnung von einzelnen Schichten zueinander beschrieben ist. Die einzelnen Schichten sind dabei mit Rillennägeln vernagelt.

Die Verbundbauteile werden insbesondere für den Hausbau eingesetzt. Hierbei gibt es nun zwei Konzepte. Bei dem ersten Konzept wird die Holzbautafel entsprechend dem Bauplan konfektioniert, das heißt, Ausschnitte wie Fensteröffnungen oder Türöffnungen in der Holzbautafel werden gleich von vornherein eingeplant und realisiert. Es führt dazu, daß an der Holzbautafel keine weiteren spanabhebende Bearbeitungen vorgesehen werden. Nachteilig bei dieser Vorgehensweise ist, daß die Holzbautafeln nicht auf Vorrat gefertigt werden können, da ja die genaue Ausgestatung erst im konkreten Auftrag bekannt ist. Eine kostengünstige Massenfertigung der Verbundteile führt zu identischen Bauteilen, die hernach einer individuelle Anpassung zugeführt werden. Ein insbesondere aus Holz bestehendes Verbundbauteil wird dabei günstigerweise mit entsprechenden Holzbearbeitungsmaschinen, wie Sägen, Fräsen, Bohren spanabhebend, zum Beispiel auf Abbundanlagen, Holzbearbeitungszentren, bearbeitet. Die aus der deutschen Offenlegungsschrift 196 03 833 bekannten Tafeln sind hierfür nicht einsetzbar, da die aus Stahlstiften bestehenden Nägel Holzbearbeitungswerkzeuge sofort ruinieren.

Das aus der internationalen Patentanmeldung WO 00/03850 bekannte Verbundbauteil wäre entsprechend mit Holzwerkzeugen beliebig bearbeitbar. Jedoch ist, wie vorher geschildert, der Herstellungsaufwand für diese Verbundbautafel extrem hoch und daher auch nicht wirtschaftlich.

Ausgehend von diesem Stand der Technik hat sich die Erfindung die Aufgabe gestellt, ein Verbundbauteil vorzustellen, das möglichst einfach herstellbar ist und trotzdem in seinem weiteren Einsatz möglichst hohe Flexibilität bietet.

Gelöst wird diese Aufgabe durch ein Verbundbauteil nach Anspruch 1 und ein Verfahren zu dessen Herstellung nach Anspruch 18.

Weitere Besonderheiten und bevorzugte Ausführungen der Erfindung sind in dem Unteransprüchen augegeben.

Durch diesen erfindungsgemäßen Vorschlag wird ein überraschendes Ergebnis erreicht. Der Herstellungsaufwand für das Verbundbauteil ist äußerst gering. Die verwendeten Verbindungsmittel werden zum Beispiel einfach in die Schichten eingeschossen. Die Verbundbauteile werden dabei als nicht konfektionierte, nicht auf das jeweilige Bauvorhaben angepasste Bauteile, auf Vorrat produziert. Ist dann der Bauplan bekannt, werden aus den bereits vorproduzierten Verbundbauteilen die jeweiligen spezifischen Bauteile, zum Beispiel eine Zimmerwand oder eine Außenwand mit Tür- oder Fensteröffnungen und so weiter, geschnitten. Eine auf den jeweiligen Auftrag abstellende Vorbereitung der Bauteile entfällt, wodurch das Verbundbauteil in großer Serie auch vollautomatisch vorproduzierbar ist und dann bei Bedarf gegebenenfalls vollautomatisch auf den entsprechenden Bearbeitungsanlagen weiterbearbeitet wird. Die Erfindung revolutioniert insofern die auf den Einzelfall ausgerichtete Verbundbauteilfertigung. Dabei ist bei der Erstellung eines erfindungsgemäßen Verbundbauteils, insbesondere bei deren weiterverarbeitung, im Vergleich mit der herkömmlichen Vorgehensweise kein zusätzlicher Aufwand zu befürchten. Denn auch bei der konventionellen, auf den Einzelauftrag bezogenen Fertigung ist immer eine maßgenaue Anordnung der entsprechenden Öffnung notwendig, wie es auch bei dem Einbringen der Öffnungen in das erfindungsgemäße Verbundbauteil notwendig ist. Die hierbei ausgeschnittenen Verbundbauteilreste können dabei bei der nächsten Produktion von Verbundbauteilen recycelt werden.

Nach der Erfindung kremzen sich die insbesondere länglichen beziehungsweise profilartigen Elemente (3) der aufeinander liegenden Schichten (2) rechtwinklig oder in einem Winkel ≥ 45°.

Da nach der Erfindung die Verbindungsmittel aus Aluminium, Mersing, Kuhstststoff oder faserverstärkendem Kunststoff bestehen, sind diese mit Holzbearbeitungswerkzeugen, wie Fräser, Sägen bearbeitbar. Dabei bieten diese aus den genannten Materialien bestehenden Verbindungsmittel nicht nur bei dem Erstellen des Hauses aus den entsprechend überarbeiteten Verbundbauteilen Vorteile, natürlich ist es problemlos möglich, zum Beispiel nachträglich an einer entsprechenden Wand mit Holzbearbeitungswerkzeugen, zum Beispiel Schlitze für Installationsleitungen oder dergleichen einzuarbeiten. Der Einsatz von Trennschleifern, wie ansonsten für das Schneiden von Eisennägeln bekannt, ist überhaupt nicht mehr notwendig, eine hieraus resultierende Brandgefahr ist von vornherein gebannt.

Hierbei ist es nach der Erfindung vorteilhaft, Verbindungsmittel aus Aluminium einzusetzen. Dabei ist Aluminium mit Holzbearbeitungsmaschinen problemlos bearbeitbar, wie dies bereits im Schreinerhandwerk heutzutage üblich ist. Aluminium weist auch eine ausreichende Scheerfestigkeit und Stabilität auf. Die Aluminiumnägel werden dabei in großer Zahl in das Verbundbauteil schichtweise eingearbeitet, zum Beispiel eingeschossen oder eingenagelt, wodurch eine hohe Festigkeit und Stabilität des Verbundbauteiles erreicht wird.

Ähnlich wie Verbindungsmittel beziehungsweise Nägel aus Aluminium werden günstige Ergebnisse mit Kunststoff oder faserverstärkten Kunststoffen. Dabei können diese Kunststoffverbindungsmittel auch metallbewährt oder teilmetallbewährt ausgebildet sein.

Verbindungsmittel, wie Nägel aus Aluminium oder Kunststoff, haben den Vorteil, daß sie die einzelnen Schichten des Verbundbauteils leicht durchdringen und nicht zuerst ein Bohrloch benötigen, um eingesetzt zu werden. Der Halt von Nägeln in dem Verbundbauteil ist ausreichend, um die einzelnen Schichten dicht zusammenzuhalten.

Vorteilhafterweise können auch Nägel mit Widerhaken oder auch Schraubnägel, die mit einem sanften Gewinde versehen sind, zum Verbinden der einzelnen Schichten des Verbundbauteils verwendet werden, wobei jedoch zum Einbringen der Verbindungsmittel in das Verbundbauteil kein Schraubendreher benötigt wird, sondern das Verbindungsmittel allein durch Einschlagen in das Verbundbauteil dringt. Ein Einsatz von Schrauben zum Verbinden der einzelnen Schichten soll nach der Erfindung ebenfalls möglich sein. Ausdrücklich wird darauf hingewiesen, daß es auf eine formschlüssige oder kraftschlüssige Verbindung des Verbindungsmittels mit der jeweiligen Schicht allein nicht ankommt. Im Vordergrund steht der einfache Aufbau der Wand und die einfache Herstellung der Wand, indem eine geringe Anzahl von unterschiedlichen Bearbeitungsschritten benötigt wird.

Ebenfalls haben sich Nagelplatten, die aus einer Metallplatte bestehen, aus der spitz zulaufendes Material herausgebogen ist, zum Verbinden zwei oder mehrerer Schichten bewährt. Die Nagelplatten werden dabei zwischen die einzelnen Schichten gelegt und verbinden diese. Es können aber auch netzartige Nagelplatten vorgesehen werden, um einen möglichst großflächigen Verbund herzustellen.

Anstelle von Nägeln mit Köpfen reichen zum Verbinden der Schichten auch Stifte, die beispielsweise an einem oder beiden Enden spitz zulaufen. Um ein Verarbeiten der Stifte mit beidseitig auslaufenden Spitzen zu ermöglichen, ist es zum Beispiel möglich, ein aus Karton oder Papier bestehendes Trägermaterial mit diesen Stiften zwischen die einzelnen Schichten einzubringen oder aber Holznagelleisten vorzusehen, die in die Schicht entsprechend eingedrückt und eingearbeitet werden.

Die einzelnen Schichten dieses Verbundbauteils bestehen vorteilhafterweise aus aneinander gelegten Elementen wie Platten, Brettern, Leisten, Pfosten und dergleichen, wobei die Ausrichtung der Elemente von Schicht zu Schicht unterschiedlich ist. Die Lage der Elemente der obersten Schicht kann gegenüber der nächsten Schicht beispielsweise im rechten Winkel oder einem Winkel ≥ 45° zueinander stehen, so daß für das Verbundbauteil eine hohe Festigkeit in alle Richtungen gegeben ist. Das Verbundbauteil kann dabei auch aus verschiedenen Platten aufgebaut werden, die einander überlappen und so ebenfalls eine verzahnende Wirkung mit den benachbarten Schichten ergeben.

Vorteilhafterweise bestehen die Elemente der einzelnen Schichten aus nur einem Material, wie beispielsweise Holz, das zumindest im biologischen Hausbau bevorzugt eingesetzt wird. Die Erfindung schließt jedoch auch Verbundbauteile ein, die aus anderen Materialien wie Holz gefertigt sind. Es kommen für die Elemente der Verbundbauteile ebenfalls Materialien wie Gipsplatten, Faserplatten oder Bauteile aus Kunststoff und so weiter in Frage, wobei gegebenenfalls für die einzelnen Schichten verschiedene Materialien eingesetzt werden können. So ist es möglich, je nach Charakteristik der einzelnen Materialien, Verbundbauteile mit einer hohen Festigkeit, guter thermischer Isolation und/ oder guter Schallisolation und so weiter herzustellen. Durch diese Vorgehensweise ist es möglich die Kosten für das Verbundbauteil gering zu halten, da nur soviel von dem jeweiligen Material eingesetzt wird, um gerade noch die gewünschten Eigenschaften zu erhalten, wobei die restlichen Schichten gegebenenfalls aus einem preiswerteren Material hergestellt sein können.

Es hat sich als günstig erwiesen, daß Elemente einer Schicht die gleiche Dicke aufweisen, um zu vermeiden, daß zwischen den Schichten Hohlräume entstehen, die eine Verminderung der Festigkeit des Verbundbauteiles bewirken könnten. Je dichter die Elemente zueinander und die Schichten aneinander liegen, umso höher ist anschließend die Stabilität des fertigen Verbundbauteiles.

Ein weiterer Vorteil von dicht aneinander liegenden Elementen einer Schicht liegt darin, daß Witterungseinflüsse, wie Wind, Regen, Feuchtigkeit, nur sehr schwach in das Bauteil ein- beziehungsweise das Bauteil durchdringen. Um diesen Effekt zu unterstützen, ist nach einer weiteren Variante der Erfindung vorgesehen, die einzelnen Elemente einer Schicht derart aneinander zu legen, daß sie sich in Bereichen überlappen beziehungsweise ineinander greifen. Zur Bildung einer einzelnen Schicht werden diese Elemente zueinander parallel dicht aneinander gelegt, so daß möglichst kein Spalt zwischen diesen einzelnen Elementen verbleibt.

Es hat sich als besonders vorteilhaft erwiesen, die einzelnen Elemente an ihren Rändern mit Nut und Feder oder einem Falzprofil zu versehen oder den Rand so zu profilieren, daß das nächste Element in das erste eingreift. Auf diese Weise bilden diese Schichten eine hohe Dichtigkeit gegen Wind und Wetter.

Die nächste Schicht besteht ebenfalls aus dicht aneinander gelegten Elementen, wobei die Ausrichtung dieser Elemente zu der Ausrichtung der darunter liegenden Elemente abweicht. Auch die Elemente der zweiten Schicht weisen gegebenenfalls an ihren umlaufenden Rändern Vertiefungen oder Vorsprünge auf, die mit den benachbarten Elementen zusammenwirken, um eine dichte Schicht zu bilden.

Nunmehr ist vorgesehen, die einzelnen Schichten miteinander zu verbinden. Zu diesem Zweck werden vorteilhafterweise zwei dieser Schichten möglichst dicht aufeinander gepresst und anschließend miteinander verbunden. Dies kann beispielsweise dadurch geschehen, daß ein Verbindungsmittel wie ein Nagel die oberste Schicht durchdringt und bis in die darunter liegende Schicht eingreift.

Nach einer weiteren Ausführungsform der Erfindung ragt das Verbindungsmittel durch zwei Schichten hindurch und dringt teilweise in eine bereits unter den beiden beschriebenen Schichten angeordnete dritte Schicht ein, so daß die Reibung beider Schichten an dem Verbindungsmittel über die volle Höhe ausgenutzt werden kann. Eine Befestigung der dritten Schicht mittels dieses Verbindungsmittels ist nach diesem Ausführungsbeispiel nicht vorgesehen, wobei jedoch der Effekt, daß die dritte Schicht leicht mit der zweiten Schicht verbunden ist, doch einen positiven Effekt hat. Gemäß der Erfindung ist jedes Verbindungsmittel, ob Nagel, Schraube, Klammer und so weiter, in dieser Weise einbringbar. Werden Schrauben verwendet, so können entsprechende Verschraubungsautomaten einen Druckluftnagler ersetzen.

Auch wenn in dieser Anmeldung oftmals von Vernageln gesprochen wird, so soll dies in keinster Weise die Verbindungstechnik auf einen reibschlüssigen Verbund beschränken, sondern ist synonym als Verbinden zu verstehen und umschließt natürlich auch einen kraft- beziehungsweise formschlüssigen Verbund.

Es ist nach der Erfindung nicht nur vorgesehen jeweils nur zwei Schichten miteinander zu verbinden, sondern es kann eine dritte Schicht auf der darunter angeordneten zweiten Schicht aufgenagelt werden und eventuell eine vierte Schicht auf die dritte Schicht. Weiterhin können zuerst alle Schichten aufeinandergelegt sein und alle Schichten gleichzeitig in einem Arbeitsgang miteinander verbunden werden.

Je nach Länge oder Breite der einzelnen Elemente ist vorgesehen, daß zumindest an jedem Kreuzungspunkt der Elemente benachbarter Schichten ein Verbindungsmittel vorgesehen ist. Dies ist insbesondere dann von Vorteil, wenn die einzelnen Elemente der benachbarten Schichten annähernd die gleiche Breite aufweisen. Für den Fall, daß die Elemente der einen Schicht plattenförmig und die der weiteren Schicht zum Beispiel pfostenförmig ausgebildet sind, müssen gegebenenfalls mehrere Verbindungselemente verwendet werden, um eine ausreichende Verbindung zwischen den einzelnen Schichten herzustellen.

Die Dicke der Schichten des Verbundbauteiles kann gleich sein oder unterschiedlich ausgewählt werden. Beispielsweise ist vorgesehen, das Verbundbauteil aus einer innersten Schicht aus dicken Pfosten herzustellen und darauf verschiedene Schichten aus Brettern, Bohlen oder Leisten aufzubringen und zum Abschluß eine Schicht aus einer oder mehreren Platten zu befestigen. Vorteilhafterweise liegen die Schichten mit größerer Dicke in der Mittelebene des Verbundbauteiles, wobei das Verbundbauteil zu dieser Mittelebene hin im wesentlichen symmetrisch aufgebaut ist. Hieraus ergibt sich eine entsprechend hohe Stabilität.

Wie bereits beschrieben wurde, weisen die Elemente einer Schicht jeweils die gleiche Dicke auf. Es hat sich herausgestellt, daß es Vorteile bringt, wenn die Elemente der einzelnen Schichten wiederum aus Elementteilen zusammengesetzt sind, die in der Summe die gewünschte Dicke ergeben. So können beispielsweise Verschnitthölzer zum Bilden der Elemente verwendet werden, was Herstellkosten senkt. Die zusammengesetzen Elemente ergeben möglicherweise auch eine höhere Festigkeit als ein einteiliges Element gleicher Abmessung.

Die Elementteile zum Bilden eines Elementes sind zueinander parallel ausgerichtet und können miteinander verleimt (Leimbinder) oder auch wie das gesamte Verbundbauteil einzeln miteinander vernagelt oder verbunden sein.

Soll das Verbundbauteil im wesentlichen aus Holz bestehen, hat es sich als günstig herausgestellt, für die die Schichten bildenden Elemente ungehobeltes Holz zu verwenden. Zum einen spart man mit ungehobelten Elementen einen Bearbeitungsschritt ein und zum anderen werden kleine Luftkammern zwischen den Elementen gebildet, die dem Verbundbauteil beispielsweise eine bessere thermische Isolation geben.

Die Außenflächen des Verbundbauteiles sind vorteilhafterweise gehobelt, um entweder diekt als Außenwand zu dienen oder um eine ideale Grundlage für das Aufbringen von Farbe oder Tapeten usw. zu schaffen.

Je dichter die Schichten aneinander liegen, desto höher ist die Stabilität des fertigen Verbundbauteiles, weshalb die Elemente und die Schichten vor dem Vernageln fest gegeneinander gepreßt werden. Die Schichten liegen möglichst bündig aneinander.

Wie es sich herausgestellt hat, erzeugen die zwischen den Schichten entstehenden Luftkammern, beispielsweise gebildet durch das Aneinanderlegen ungehobelter Elemente, eine bessere thermische Isolation. Nach einer weiteren Ausgestaltung der Erfindung werden Luftkammern dadurch erzeugt, daß in die Elemente Nuten eingefräst sind. Diese Nuten erstrecken sich jedoch nicht unbedingt über die gesamte Höhe oder Breite des Verbundbauteiles. Es reichen kurze über die gesamten Schichten verteilte Nuten aus, um den gewünschten Effekt zu erzielen. Eine weitere Möglichkeit Luftkammern zu bilden besteht darin, Elemente zu verwenden, die nicht ganz gerade Außenkanten besitzen. Im Holzbau eignet sich dazu Holz aus dem Randbereich von Stämmen, sogenannte Schwarten oder ähnliches. Zwischen den nebeneinander liegenden Schwarten bleiben Zwischenräume, die die Luftkammern bilden. Zum Herstellen von Verbundbauteilen kann also auch Material verwendet werden, das sonst keine Verwendung findet.

Um in jedem Fall das Eindringen von Feuchtigkeit in oder durch das Verbundbauteil zu vermeiden, wird nach einem weiteren Ausführungsbeispiel der Erfindung zwischen die einzelnen Schichten eine dichtende Zwischenlage eingelegt. Diese kann aus einer dichten Kunststoff-Folie oder einem diffusionsoffenen, winddichten Papier oder dergleichen bestehen. Auch Karton ist als Zwischenlage vorgesehen.

Auch können in den einzelnen Elementen zwischen den Schichten Leitungskanäle vorgesehen sein, zur Aufnahme beispielsweise der elektrischen Installation oder zum Verlegen von Wasserrohren und dergleichen.

Im Folgenden wird das erfindungsgemäße Herstellverfahren zum Fertigen des erfindungsgemäßen Verbundbauteiles näher beschrieben.

Nach einer Variante der Erfindung wird zuerst eine erste Schicht aus aneinander gelegten Elementen gebildet und über diese wiederum eine zweite Schicht aus einzelnen Elementen gelegt, wobei die Ausrichtung der Elemente der zweiten Schicht gegenüber der ersten in einem Winkel steht. Vorteilhafterweise sind die Elemente in einem rechten Winkel zueinander ausgerich et, jedoch hat es sich ebenfalls geeignet herausgestellt, die Elemente der Schichten in einem Winkel auszurichten, der ≤ 90° und ≥ 45° ist. Die beiden ersten Schichten werden dann zusammengepreßt und mittels der Verbindungsmittel verbunden. Zumindest an jedem Kreuzungspunkt der Elemente der ersten Schicht mit dem der zweiten Schicht ist ein Verbindungselement vorgesehen. Nach Bedarf jedoch können auch zwei oder mehrere Verbindungsmittel zum Verbinden der Elemente verschiedener Schichten eingesetzt werden.

Sind auf diese Weise zwei Schichten miteinander verbunden, wird eine weitere Schicht aufgelegt, die wiederum mit der darunter liegenden verbunden wird.

Um die Reibung des Verbindungsmittels optimal auszunutzen, das heißt, über dessen gesamte Länge und über die Höhe zweier Schichten, kann es möglich sein, daß das Verbindungsmittel mit seinem einen Ende gegebenenfalls in eine dritte Schicht eindringt. Die dritte Schicht findet auf diese Weise jedoch gegenüber der zweiten keinen ausreichenden Halt. Die erhöhte Reibung der Schichten gegeneinander wird jedoch durch das Herausragen der Spitzen des Verbindungsmittels ausgenutzt.

Nägel als Verbindungsmittel können mit einem Hammer in das Verbundbauteil eingeschlagen werden oder zum Verkürzen der Fertigungszeit mittels Preßluft hineingeschossen werden.

Anstelle von Nägeln als Verbindungsmittel können auch einfache Stifte oder Klammer, wie Krampen oder Nagelplatten, Schrauben und so weiter, verwendet werden.

Vorteilhafterweise bestehen die Verbindungsmittel aus Aluminium oder Messing, so daß diese bei der weiteren Bearbeitung des Verbundbauteiles das Werkzeug nicht beschädigen. Ebenfalls eignen sich zu diesem Zweck Verbindungsmittel aus Kunststoff oder faserverstärktem Kunststoff.

Vor dem Verbinden der Schichten miteinander hat es sich als günstig herausgestellt, die Schichten zusammenzupressen, so daß diese möglichst dicht aneinander liegen.

Das Verbundbauteil Schicht für Schicht aufzubauen, ist eine Möglichkeit der Herstellung. Als weitere Möglichkeit ist vorgesehen, alle Schichten aufeinander zu legen, diese zusammenzupressen und anschließend in einem Arbeitsgang zu verbinden. Die Verbindungsmittel durchdringen in diesem Fall alle Schichten gleichzeitig. Auf diese Weise ist das Herstellen der Verbundbauteile preiswert, weil dadurch einige Arbeitsschritte eingespart werden.

Das Verbundbauteil wird auch auf einer geeigneten Fertigungsvorrichtung hergestellt. Eine derartige Vorrichtung weist beispielsweise einen Greifer auf, der die einzelnen Elemente oder Elementteile aufnimmt und auf einer Ablage ablegt. Mittels einer Presse können diese Elemente oder Elementteile fest gegeneinander geschoben werden, so daß zwischen ihnen möglichst kein Spalt verbleibt. Nun kann der Greifer die nächste Schicht aus Elementen über der ersten Schicht auflegen. Vorteilhafterweise ist der Greifer drehbar, um so die zweite Schicht von Elementen gegenüber der ersten um einen bestimmten Winkel verdreht abzusetzen. Auch die Elemente der zweiten Schicht werden nun gegeneinander geschoben.

Nun erfolgt in einem Fall das Verbinden dieser beiden Schichten miteinander, wobei hier ein Andrückaggregat zum Zusammenpressen der Schichten zum Einsatz kommen kann; in einem anderen Fall werden erst alle Schichten aufeinander gelegt und erst dann miteinander verbunden. Je nach Material des verwendeten Verbindungsmittels ist eine weitere Bearbeitung des Verbundbauteils möglich. Das Verbundbauteil kann besäumt werden oder es werden Aussparungen für Türen, Fenster usw. ausgeschnitten.

Es hat sich als vorteilhaft erwiesen, daß Verbundbauteil auf einer Portalanlage herzustellen, wobei der Greifer, der Befestigungsapparat, das Press- bzw. Andrückaggregat und evtl. die Werkzeuge zur Weiterbearbeitung an einem Portal angeordnet sind, das über die Auflage zur Herstellung des Verbundbauteils bzw. anschließend über das fertige Verbundbauteil fährt.

Die Erfindung wird im folgenden anhand einer Zeichnung näher dargestellt. Es zeigen:

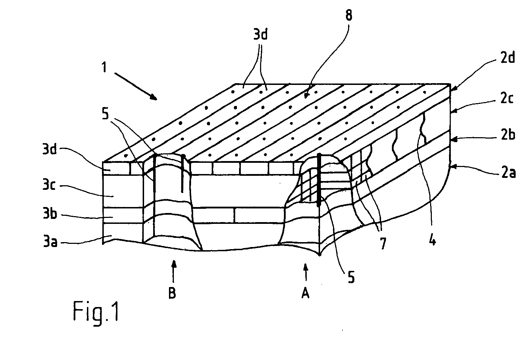

- Fig. 1 bis 4: verschiedene Ausführungsformen eines erfindungsgemäßen Verbundbauteils, perspektivisch dargestellt.

In Fig. 1 ist nur ein Teilausschnitt eines Verbundbauteils 1 dargestellt, worin zu erkennen ist, daß dieses Verbundbauteil 1 aus mehreren Schichten 2 unterschiedlich dicker Einzelelemente 3 zusammengesetzt ist. Dieses Verbundbauteil 1 besteht zum Beispiel aus einer unteren Schicht 2a von Elementen 3a aus relativ dicken Bohlen, die dicht an dicht aneinander gelegt sind. Auf dieser Schicht 2a von Bohlen 3a ist eine weitere Schicht 2b aus relativ flachen Brettern 3b aufgelegt, wobei hier die Ausrichtung der Bretter 3b gegenüber den darunter angeordneten Bohlen 3a rechtwinklig verläuft.

Um diese beiden Schichten 2a und 2b möglichst gut miteinander zu verbinden, ist vorgesehen, zuerst die einzelnen Elemente 3a und die einzelnen Elembente 3b dicht aneinander zu pressen und zusätzlich die Schichten 2a aus den Elementen 3a und 2b aus den Elementen 3b aufeinander zu pressen, wonach diese beiden Schichten 2a und 2b mit den Verbindungsmitteln 5 miteinander verbunden werden. Als Verbindungsmittel 5 eignen sich insbesondere Nägel, die mindestens zwei dieser Schichten 2 ein- oder durchdringen. Zumindest an den Kreuzungspunkten der Elemente 3a, 3b beider Schichten 2a, 2b ist eines der Verbindungsmittel 5 gesetzt. Jedoch soll es auch möglich sein, bei Bedarf mehr als nur ein Verbindungsmittel 5 pro Kreuzungspunkt einzunageln.

Nach einer besonderen Ausführungsform der Erfindung durchgreift das Verbindungsmittel 5 eine dieser Schichten 2b und ragt in die darunter liegende Schicht 2a hinein, so daß eine Verbindung zwischen beiden Schichten 2a, 2b entsteht. Es ist auch vorgesehen, daß das Verbindungsmittel 5 beide Schichten 2a, 2b vollständig durchdringt und in eine nicht dargestellte darunter liegende weitere Schicht hineinragt. Auf diese Weise wird die Reibkraft des gesamten Verbindungsmittels 5 voll ausgenutzt und es wird gewährleistet, daß beide Schichten 2a und 2b kraftschlüssig miteinander verbunden sind.

Auf dieser zweiten Schicht 2b wird nach der Fig. 1 eine weitere Schicht 2c aus Pfosten 3c aufgelegt, die, wie hier dargestellt, über eine Nut-und Feder-Verbindung 4 ineinander greifen. Diese dritte Schicht 2c, ist wiederum auf die zweite Schicht 2b aufgenagelt und wird von einer vierten Schicht 2d aus aneinander gelegten Leisten 3d abgedeckt. In den Ausschnitten A und B sind die in das Verbundbauteil 1 eingeschlagenen Verbindungsmittel 5, hier Nägel, zu sehen, wobei der Nagel des Ausschnittes A zwei Schichten 2d, 2c voll durchgreift und erst in der dritten Schicht 2b endet.

In Ausschnitt B sind Nägel 5 dargestellt, die eine Schicht 2d des Verbundbauteils 1 durchgreifen und nur bis in die nächste Schicht 2c des Verbundbauteils 1 hineinragen.

Das hier beschriebene Verbundbauteil 1 ist nur eine Teilansicht eines gesamten Verbundbauteils 1, das von einer Mittelebene aus im wesentlichen symmetrisch aufgebaut ist. Hier kann beispielsweise die Schicht 2a die Mittelebene bilden, wobei symmetrisch zu dieser Mittelschicht 2a Schichten 2b, 2c und 2d aufgelegt sind.

Die einzelnen Elemente 3 der Schichten 2 können aus gleichen Materialien, wie beispielsweise Holz, bestehen, wobei es besonders vorteilhaft ist, daß die einzelnen Lagen unterschiedlich ausgerichtet sind, so daß mit dieser Herstellung große Wand-, Decken- oder Dachelemente mit hoher Festigkeit auf Zug und Druck geschaffen werden können. Mit dieser Bauweise ist es möglich, auch mit relativ kurzen Elementen 3 große Flächen zu bilden, die relativ schnell zusammengenagelt werden können und trotzdem eine sehr hohe Stabilität aufweisen.

Anstelle von Holzelementen kann das Verbundbauteil 1 auch aus Gipselementen oder Elementen aus Kunststoffen oder Faserplatten oder dergleichen gebildet sein. Eine Kombination von Elementen aus diesen verschiedenen Materialien ist möglich.

Vorteilhafterweise weisen die einzelnen Schichten 2 jeweils die gleiche Dicke auf, so daß die Schichten 2 dicht an dicht zu liegen kommen. Wie in Fig. 1 bei den Pfosten 3c zu erkennen ist, bestehen manche der Elemente wiederum aus Elementeteilen 7, wobei diese Elementeteile 7 ebenfalls wie das gesamte Verbundbauteil 1 zusammengenagelt sein können. Auch der Einsatz von Leimbinder hat sich als geeignet herausgestellt. Der besondere Vorteil der Erfindung liegt aber darin, daß Verschnittholz, Rundholz, oder Holz mit seitlichen Rundungen, zum Beispiel aus Sägereien und so weitere, für das erfindungsgemäße Verbundbauteil ebenfalls günstigerweise eingesetzt werden kann.

Die Elemente 3b zum Beispiel könnten ebenfalls anstelle von Holzplatten Gipsplatten sein oder es werden Platten aus Kunststoff in das Verbundbauteil 5 eingelegt.

Vorteilhafterweise ist die Schicht 2a mit der größeren Dicke in der Mitte des Verbundbauteils 5 vorgesehen und die Dicke der Schichten 2b - 2d nimmt nach außen hin ab.

Es hat sich als günstig herausgestellt, für die einzelnen Elemente 3 ungehobelte Holzbauteile oder Elemente aus anderen Materialien mit einer rauen Oberfläche zu verwenden, da dadurch die Reibung zwischen den einzelnen Elementen 3 größer ist. Es bilden sich auf diese Weise kleine Luftklammern zwischen den Elementen 3 und Schichten 2, die dem Bauteil eine thermische Isolation geben. Die äußerste Schicht 3d des Verbundbauteils 1 ist vorteilhafterweise jedoch gehobelt bzw. glatt, so daß deren Oberfläche 8 einen nach außen schönen Anblick bietet, oder eine Grundlage zum Anstreichen oder Tapezieren bildet.

Um die Stabilität zu erhöhen, liegen die Schichten 2 bündig aneinander. Um dies zu erreichen, werden die einzelnen Schichten 2 vor dem Verbinden aufeinander gepreßt. Erst dann wird das Verbindungsmittel 5, beispielsweise der Nagel, eingeschlagen.

Wie sich herausgestellt hat, sind die Luftkammern insbesondere für die thermische Isolation des Verbundbauteils 1 von Vorteil, so daß nach einer weiteren Ausführungsform der Erfindung bewußt Luftkammern durch Einfräsen von Nuten gebildet werden. Um das Eindringen von Feuchtigkeit zu verhindern beziehungsweise auch gegen Wind abzudichten, kann zwischen den einzelnen Schichten 2 eine Zwischenlage 9 eingelegt sein. Es hat sich insbesondere eine dichtende Folie, ein diffusionsoffenes, winddichtes Papier oder als besonders gut geeignet erwiesen, wobei das diffusionsoffene, winddichte Papier zwar das Eindringen von Wind verhindert, jedoch ermöglicht, daß die Wand atmungsaktiv bleibt und Feuchtigkeit hinaus diffundieren kann.

Ebenfalls können zwischen den Schichten 2 in den einzelnen Elementen 3 Leitungskanäle vorgesehen sein, in denen die elektrische Installation oder auch Wasserinstallation verlegt werden kann.

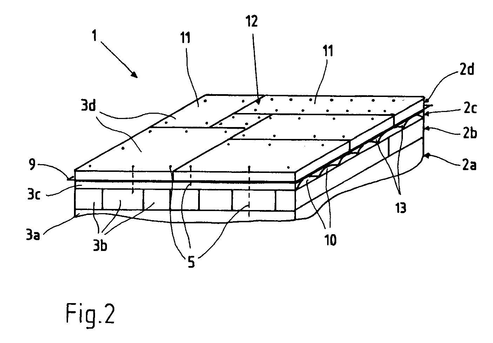

Insbesondere in der Fig. 2 ist die Zwischenlage 9 zu erkennen, die beispielsweise zwischen der äußersten 2d und der davor liegenden Schicht 2c angeordnet ist. Nach diesem Ausführungsbeispiel bestehen die Elemente 3, die das Verbundbauteil 1 bilden, aus einem Verschnittholz, wobei auch beispielsweise Randhölzer 10 von Bäumen - sogenannte Schwarten - zum Aufbau des Verbundbauteils 1 verwendet werden. Die äußerste Schicht 2d wird von Platten 11 gebildet, die unterschiedlich groß sein können und so aneinander gesetzt werden, daß eine geschlossene Fläche 12 entsteht. Die durch die Schwarten 10 gebildeten Zwischenräume 13 bilden mit der nächsten Schicht 2d beziehungsweise der dazwischen angeordneten Folie 9 zusammen Luftkammern, die wiederum die thermische Isolation des Verbundbauteils 1 erhöhen.

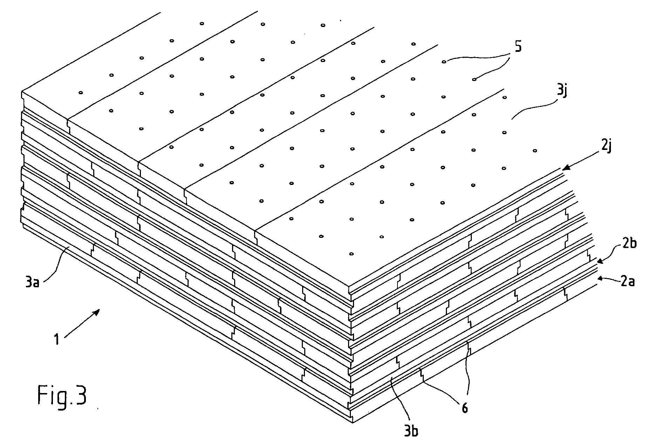

In Fig. 3 ist ein Verbundbauteil 1 aus gleichmäßig dicken Schichten 2a-2e aufgebaut, wobei die Elemente 3 der einzelnen Schichten 2 an den Kanten profilierte Bretter sind, die ineinander greifen und jede Lage dieser Bretter ist gegenüber der darüber liegenden Schicht um 90° verdreht.

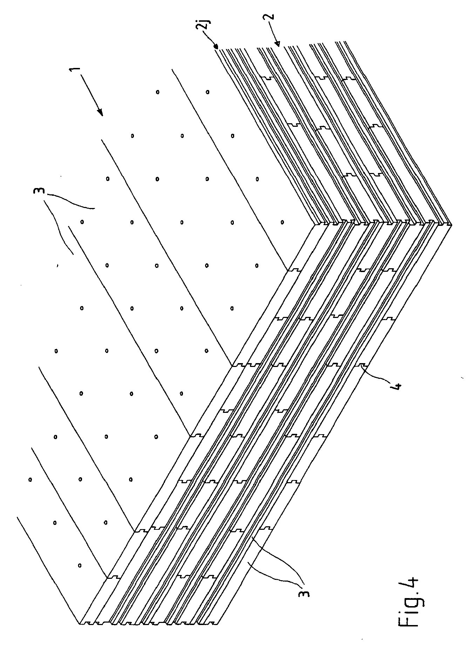

Ein weiteres Ausführungsbeispiel des erfindungsgemäßen Verbundbauteils 1 ist in Figur 4 zu sehen, das ebenfalls aus brettartigen Elementen 3 aufgebaut ist, wobei jedoch die Profilierung am Rand der Bretter Nut und Feder sind. Die Feder des einen Brettes greift in die Nut des anderen Brettes hinein.

Insbesondere das Verfahren zur Herstellung dieser Verbundbauteile ist interessant, da dieses Schicht für Schicht aufgebaut und verbunden werden können. Nicht jedes Mal werden alle Elemente einer Schicht auf der darunter liegenden angeordnet, sondern die Elemente können nach und nach auf die darunter liegende Schicht aufgebracht werden.

Zur schnelleren Herstellung werden die einzelnen Nägel, Stifte oder Krampen nicht aufgehämmert, sondern mittels Preßluft in das Verbundbauteil eingeschossen oder eingedreht (zum Beispiel bei Schrauben). Nach der Herstellung kann das Verbundbauteil weiterverarbeitet - beispielsweise besäumt oder ausgeschnitten - werden. Vorteilhafterweise sind die Verbindungsmittel aus Messing oder Aluminium oder es können Verbindungsmittel aus Kunststoff verwendet werden, so daß beim Weiterverarbeiten des Verbundbauteils das Werkzeug nicht beschädigt wird.

Das Verbundbauteil wird nicht nur von Hand hergestellt, sondern es kann eine automatische Fertigung mit einem Greifer vorgesehen sein, der die einzelnen Elemente beziehungsweise Elementeteile auflegt. Der Greifer ist nach einer Ausführung Teil einer Vorrichtung zur Herstellung des Verbundbauteils. Ebenfalls kann die Vorrichtung einen Befestigungsapparat für das Einbringen der Verbindungsmittel aufweisen. Der Greifer ist drehbar ausgestaltet, so daß er die Elemente derart aufeinander anordnen kann, daß sie gegenüber der darunter liegenden Schicht um einen bestimmten Winkel verdreht sind. Die Vorrichtung zur Herstellung der Verbundbauteile weist ebenfalls ein Andrückaggregat auf für eine möglichst spaltfreie Anordnung der einzelnen Elemente, so daß das Verbundbauteil dicht gepackt ist. Ebenfalls kann die Vorrichtung weitere Bearbeitungsaggregate wie Fräser, Sägen, Bohrer und/oder Kettensägen aufweisen. Bei dieser Vorrichtung handelt es sich vorteilhafterweise um eine Vorrichtung in Portalbauweise, wobei das Portal das Verbundbauteil zu überfahren vermag und an dem Portal die Greifer, das Befestigungsapparat und/oder das Preßbeziehungsweise Andrückaggregat fahrbar angeordnet ist.

## Patentansprüche

1. Verbundbauteil, insbesondere als Wand-, Decken- oder Dachelement für den Hausbau, bestehend aus mehreren mittels Verbindungsmitteln (5) miteinander verbundene Schichten von nebeneinander angeordneten, insbesondere länglichen Elementen, deren Ausrichtung von Schicht zu Schicht unterschiedlich ist, so dass sich die Elemente der verschiedenen Schichten kreuzen, wobei sich die Elemente (3) der aufeinander liegenden Schichten (2) rechtwinklig oder in einem Winkel ≥ 45° kreuzen, **dadurch gekennzeichnet, dass** zumindest an jedem Kreuzungspunkt von Elementen (3) benachbarter Schichten (2) ein aus Aluminium, Messing, Kunststoff oder faserverstärktem Kunststoff bestehendes Verbindungsmittel (5) vorgesehen ist.

2. Verbundbauteil nach einem oder mehreren der vorhergehenden Ansprüche, **dadurch gekennzeichnet, dass** die einzelnen Elemente (3) der Schichten (2) aus Holz, Gips, Kunststoff und dergleichen bestehen.

3. Verbundbauteil nach einem oder mehreren der vorhergehenden Ansprüche, **dadurch gekennzeichnet, dass** die Elemente (3) einer Schicht (2) die gleiche Dicke besitzen.

4. Verbundbauteil nach einem oder mehreren der vorhergehenden Ansprüche, **dadurch gekennzeichnet, dass** die Elemente (3) der einzelnen Schichten (2) ineinander greifen.

5. Verbundbauteil nach einem oder mehreren der vorhergehenden Ansprüche, **dadurch gekennzeichnet, dass** die Elemente (3) der einzelnen Schichten (2) über Nut und Feder, Falzprofilierung (6) oder dergleichen aneinander gelegt sind.

6. Verbundbauteil nach einem oder mehreren der vorhergehenden Ansprüche, **dadurch gekennzeichnet, dass** das Verbundbauteil (1) Schichten (2) mit unterschiedlicher Dicke aufweist.

7. Verbundbauteil nach einem oder mehreren der vorhergehenden Ansprüche, **dadurch gekennzeichnet, dass** Schichten (2) mit grösserer Dicke in der Mitte des Verbundbauteiles (1) vorgesehen sind.

8. Verbundbauteil nach einem oder mehreren der vorhergehenden Ansprüche, **dadurch gekennzeichnet, dass** die einzelnen Elemente (3) aus zwei oder mehreren die Schichtdicke ergebenden, im Wesentlichen parallel angeordneten Elementeteilen (7) besteht.

9. Verbundbauteil nach einem oder mehreren der vorhergehenden Ansprüche, **dadurch gekennzeichnet, dass** die Oberfläche (8) des Verbundbauteiles (1) gehobelt ist.

10. Verbundbauteil nach einem oder mehreren der vorhergehenden Ansprüche, **dadurch gekennzeichnet, dass** die Schichten (2) bündig aneinander liegen.

11. Verbundbauteil nach einem oder mehreren der vorhergehenden Ansprüche, **dadurch gekennzeichnet, dass** die einzelnen Schichten (2) gegeneinander Luftkammern einschliessen.

12. Verbundbauteil nach Anspruch 11, **dadurch gekennzeichnet, dass** die Luftkammern gebildet werden durch das Aneinanderlegen von ungehobelten Holzelementen (3).

13. Verbundbauteil nach Anspruch 11 oder 12, **dadurch gekennzeichnet, dass** die Luftkammern gebildet werden durch eingefräste Nuten.

14. Verbundbauteil nach einem oder mehreren der vorhergehenden Ansprüche, **dadurch gekennzeichnet, dass** zwischen den einzelnen Schichten (2) eine Zwischenlage (9) eingelegt ist.

15. Verbundbauteil nach Anspruch 14, **dadurch gekennzeichnet, dass** als Zwischenlage (9) eine dichtende Folie oder ein diffusionsoffenes, winddichtes Papier oder dergleichen vorgesehen ist.

16. Verbundbauteil nach einem oder mehreren der vorhergehenden Ansprüche, **dadurch gekennzeichnet, dass** in dem Verbundbauteil (1) Leitungskanäle vorgesehen sind.

17. Verbundbauteil nach einem oder mehreren der vorhergehenden Ansprüche, **dadurch gekennzeichnet, dass** die Schichten (2) mittels Stiften, Klammern, Nagelplatten, Schrauben oder dergleichen als Verbindungsmittel (5) zusammengehalten werden.

18. Verfahren zur Herstellung eines Verbundbauteiles nach einem oder mehreren der vorhergehenden Ansprüche, **dadurch gekennzeichnet, dass** nacheinander Schichten von aneinandergelegten Elementen gebildet und aufeinandergelegt werden, wobei jeweils zwei dieser Schichten mittels Verbindungsmittel aus Aluminium, Messing, Kunststoff oder faserverstärktem Kunststoff, insbesondere Nägeln miteinander verbunden werden, wobei die Elemente der einzelnen Schichten an ihren Kreuzpunkten verbunden werden, und wobei die Elemente der einzelnen Schichten in einem bestimmten Winkel zueinander stehen, wobei sich die Elemente (3) der aufeinander liegenden Schichten (2) rechtwinklig oder in einem Winkel ≥ 45° kreuzen.

19. Verfahren zur Herstellung von Verbundbauteilen nach dem vorhergehenden Anspruch 18, **dadurch gekennzeichnet, dass** zuerst eine erste Schicht von Elementen aufgelegt wird und hernach zumindest ein Element der zweiten beziehungsweise nachfolgenden Schicht auf die erste Schicht überlappend oder kreuzend zur darunterliegenden Schicht aufgelegt wird und gleich mit der ersten Schicht verbunden wird.

20. Verfahren zur Herstellung von Verbundbauteilen nach einem oder beiden der Ansprüche 18 und 19, **dadurch gekennzeichnet, dass** zuerst eine erste Schicht von Elementen aufgelegt wird und hernach mehrere beziehungsweise alle Elemente der zweiten Schicht kreuzend zur darunterliegenden Schicht aufgelegt und blockweise mit der ersten Schicht verbunden werden und so die zweite Schicht abgeschlossen wird und die darauffolgenden Schichten in gleicher Weise aufgebaut werden.

21. Verfahren zur Herstellung von Verbundbauteilen nach einem oder mehreren der Ansprüche 18 bis 20, **dadurch gekennzeichnet, dass** die Verbindungsmittel beziehungsweise Nägel mittels Pressluft in das Verbundbauteil eingebracht, insbesondere eingeschossen werden.

22. Verfahren zur Herstellung von Verbundbauteilen nach einem oder mehreren der Ansprüche 18 bis 21, **dadurch gekennzeichnet, dass** die jeweiligen Schichten beziehungsweise die zu verbindenden Elemente oder Schichten vor dem Verbinden miteinander zusammengepresst werden.

23. Verfahren zur Herstellung von Verbundbauteilen nach einem oder mehreren der Ansprüche 18 bis 22, **dadurch gekennzeichnet, dass** vor einem Verbinden der einzelnen Elemente mit der darunterliegenden Schicht mehrere Elemente oder das zuletzt aufgelegte und zu verbindende Element an in der Schicht benachbarte Elemente gepresst werden.

24. Verfahren zur Herstellung von Verbundbauteilen nach einem oder mehreren der Ansprüche 18 bis 23, **dadurch gekennzeichnet, dass** das Element mit der darunterliegenden Schicht während des Pressens verbunden wird.

25. Verfahren zur Herstellung von Verbundbauteilen nach einem oder mehreren der Ansprüche 18 bis 24, **dadurch gekennzeichnet, dass** das Verbundbauteil anschliessend bearbeitet, zum Beispiel besäumt oder ausgeschnitten wird.

## Claims

1. Composite component, in particular in the form of a wall, ceiling or roof element for house building, consisting of a plurality of layers of elements, in particular elongated elements, arranged next to one another, connected to one another by connecting means (5) and the alignment of which differs from layer to layer so that the elements of the different layers cross, the elements (3) of the layers (2) lying one on another crossing at right angles or at an angle ≥ 45°, **characterised in that** a connecting means (5) made of aluminium, brass, plastic or fibre-reinforced plastic is provided at least at every crossing point of elements (3) of neighbouring layers (2).

2. Composite component according to one or more of the preceding claims, **characterised in that** the individual elements (3) of the layers (2) are made of wood, plaster, plastic and the like.

3. Composite component according to one or more of the preceding claims, **characterised in that** the elements (3) of a layer (2) have the same thickness.

4. Composite component according to one or more of the preceding claims, **characterised in that** the elements (3) of the individual layers (2) engage in one another.

5. Composite component according to one or more of the preceding claims, **characterised in that** the elements (3) of the individual layers (2) are assembled together by tongue and groove, rabbet profiling (6) or the like.

6. Composite component according to one or more of the preceding claims, **characterised in that** the composite component (1) exhibits layers (2) of different thickness.

7. Composite component according to one or more of the preceding claims, **characterised in that** layers (2) of greater thickness are provided in the middle of the composite component (1).

8. Composite component according to one or more of the preceding claims, **characterised in that** the individual elements (3) are made of two or more element parts (7) arranged essentially parallel and determining the layer thickness.

9. Composite component according to one or more of the preceding claims, **characterised in that** the surface (8) of the composite component (1) is planed.

10. Composite component according to one or more of the preceding claims, **characterised in that** the layers (2) lie flush with one another.

11. Composite component according to one or more of the preceding claims, **characterised in that** the individual layers (2) together enclose air chambers. (?)

12. Composite component according to claim 11, **characterised in that** the air chambers are formed by assembling unplaned wooden elements (3) together.

13. Composite component according to claim 11 or 12, **characterised in that** the air chambers are formed by milled slots.

14. Composite component according to one or more of the preceding claims, **characterised in that** an intermediate layer (9) is fitted between the individual layers (2).

15. Composite component according to claim 14, **characterised in that** a sealing film or a diffusion-permitting windproof paper or the like is provided as the intermediate layer (9).

16. Composite component according to one or more of the preceding claims, **characterised in that** ducts are provided in the composite component (1).

17. Composite component according to one or more of the preceding claims, **characterised in that** the layers (2) are held together by means of pins, staples, nailing plates, screws or the like as connecting means (5).

18. Method for producing a composite component according to one or more of the preceding claims, **characterised in that** one after another layers of assembled elements are formed and placed one on another, with in each case two of these layers being connected together by connecting means made of aluminium, brass, plastic or fibre-reinforced plastic, in particular nails, the elements of the individual layers being connected at their crossing points, and the elements of the individual layers lying at a certain angle to one another, the elements (3) of the layers (2) lying one on another crossing at right angles or at an angle ≥ 45°.

19. Method for producing composite components according to the preceding claim 18, **characterised in that** first a first layer of elements is laid in place and then at least one element of the second or following layer is laid on the first layer overlapping or crossing the underlying layer and immediately connected to the first layer.

20. Method for producing composite components according to one or both of claims 18 and 19, **characterised in that** first a first layer of elements is laid in place and then a plurality or all of the elements of the second layer are laid on crossing the underlying layer and connected to the first layer block by block and thus the second layer is completed and the following layers are built up in the same way.

21. Method for producing composite components according to one or more of claims 18 to 20, **characterised in that** the connecting means or nails are introduced, in particular fired, into the composite component by means of compressed air.

22. Method for producing composite components according to one or more of claims 18 to 21, **characterised in that** the respective layers or the elements or layers to be connected are pressed together before they are connected.

23. Method for producing composite components according to one or more of claims 18 to 22, **characterised in that** before the individual elements are connected to the underlying layer, a plurality of elements or the last element laid in place and to be connected are pressed against neighbouring elements in the layer.

24. Method for producing composite components according to one or more of claims 18 to 23, **characterised in that** the element is connected to the underlying layer during the pressing.

25. Method for producing composite components according to one or more of claims 18 to 24, **characterised in that** the composite component is then machined, for example edge-planed or cut out.

## Revendications

1. Elément composite, en particulier élément de paroi, de plafond ou de toiture pour la construction de bâtiments, constitué de plusieurs couches, reliées les unes aux autres au moyen de moyens d'assemblage (5), d'éléments disposés les uns à côté des autres, en particulier d'éléments allongés, dont l'orientation est différente de couche en couche, de sorte que les éléments des diverses couches se croisent, sachant que les éléments (3) des couches (2) disposées les unes sur les autres se croisent de manière à former un angle droit ou un angle ≥ 45°, **caractérisé en ce qu'**un élément d'assemblage (5) constitué d'aluminium, de laiton, de matière plastique ou de matière plastique renforcée de fibres est prévu au moins au niveau de chaque point d'intersection des éléments (3) des couches (2) adjacentes.

2. Elément composite selon l'une quelconque ou plusieurs des revendications précédentes, **caractérisé en ce que** les divers éléments (3) des couches (2) sont constitués de bois, de plâtre, de matière plastique et similaire.

3. Elément composite selon l'une quelconque ou plusieurs des revendications précédentes, **caractérisé en ce que** les éléments (3) d'une couche (2) présentent la même épaisseur.

4. Elément composite selon l'une quelconque ou plusieurs des revendications précédentes, **caractérisé en ce que** les éléments (3) des diverses couches (2) s'imbriquent les uns dans les autres.

5. Elément composite selon l'une quelconque ou plusieurs des revendications précédentes, **caractérisé en ce que** les éléments (3) des diverses couches (2) sont placés les uns contre les autres par l'intermédiaire de rainures et ressorts, et de profils à emboîtement (6) ou similaires.

6. Elément composite selon l'une quelconque ou plusieurs des revendications précédentes, **caractérisé en ce que** l'élément composite (1) présente des couches (2) présentant une épaisseur différente.

7. Elément composite selon l'une quelconque ou plusieurs des revendications précédentes, **caractérisé en ce que** des couches (2) présentant une épaisseur plus importante sont prévues au centre de l'élément composite (1).

8. Elément composite selon l'une quelconque ou plusieurs des revendications précédentes, **caractérisé en ce que** les divers éléments (3) sont constitués de deux ou plusieurs parties d'élément (7) donnant l'épaisseur de couche, disposées essentiellement de manière parallèle.

9. Elément composite selon l'une quelconque ou plusieurs des revendications précédentes, **caractérisé en ce que** la surface (8) de l'élément composite (1) est rabotée.

10. Elément composite selon l'une quelconque ou plusieurs des revendications précédentes, **caractérisé en ce que** les couches (2) sont au même niveau.

11. Elément composite selon l'une quelconque ou plusieurs des revendications précédentes, **caractérisé en ce que** les diverses couches (2) renferment des chambres d'air les unes contre les autres.

12. Elément composite selon la revendication 11, **caractérisé en ce que** les chambres d'air sont formées par la juxtaposition d'éléments en bois (3) non rabotés.

13. Elément composite selon la revendication 11 ou 12, **caractérisé en ce que** les chambres d'air sont formées par des rainures fraisées.

14. Elément composite selon l'une quelconque ou plusieurs des revendications précédentes, **caractérisé en ce qu'**une couche intermédiaire (9) est placée entre les diverses couches (2).

15. Elément composite selon la revendication 14, **caractérisé en ce qu'**on prévoit en tant que couche intermédiaire (9) un film assurant l'étanchéité ou un papier à ouvertures de diffusion, étanche au vent ou similaire.

16. Elément composite selon l'une quelconque ou plusieurs des revendications précédentes, **caractérisé en ce que** des canaux conducteurs sont prévus dans l'élément composite (1).

17. Elément composite selon l'une quelconque ou plusieurs des revendications précédentes, **caractérisé en ce que** les couches (2) sont maintenues ensemble au moyen de moyens d'assemblage (5) tels que des tiges, des pinces, des panneaux à clous, des vis ou similaire.

18. Procédé de fabrication d'un élément composite selon l'une quelconque ou plusieurs des revendications précédentes, **caractérisé en ce que** des couches d'éléments juxtaposés sont formées les unes après les autres et sont posées les unes sur les autres, sachant que respectivement deux desdites couches sont reliées entre elles au moyen de moyens d'assemblage en aluminium, en laiton, en matière plastique ou en matière plastique renforcée de fibres, en particulier au moyen de clous, sachant que les éléments des diverses couches sont reliés au niveau de leurs points d'intersection, et sachant que les éléments des diverses couches sont disposés les uns par rapport aux autres selon un angle défini, sachant que les éléments (3) des couches (2) situées les unes sur les autres se croisent de manière à former un angle droit ou un angle ≥ 45°.

19. Procédé de fabrication d'éléments composites selon la revendication précédente 18, **caractérisé en ce qu'**en premier lieu une première couche d'éléments est posée, puis **en ce qu'**au moins un élément de la deuxième couche ou de la couche suivante est posé sur la première couche de manière à chevaucher ou de manière à croiser la couche située en dessous et est relié à la première couche.

20. Procédé de fabrication d'éléments composites selon l'une quelconque ou selon les deux revendications 18 et 19, **caractérisé en ce qu'**en premier lieu une première couche d'éléments est posée, puis **en ce que** plusieurs éléments voire tous les éléments de la deuxième couche sont posés de manière à croiser la couche située en dessous et sont reliés par groupes à la première couche formant ainsi la deuxième couche, et **en ce que** les couches qui suivent sont élaborées de la même manière.

21. Procédé de fabrication d'éléments composites selon l'une quelconque ou plusieurs des revendications 18 à 20, **caractérisé en ce que** les moyens d'assemblage ou les clous sont mis en place, en particulier sont injectés, dans l'élément composite au moyen d'air comprimé.

22. Procédé de fabrication d'éléments composites selon l'une quelconque ou plusieurs des revendications 18 à 21, **caractérisé en ce que** les couches respectives ou les éléments ou couches à assembler sont pressés les uns avec les autres avant l'assemblage.

23. Procédé de fabrication d'éléments composites selon l'une quelconque ou plusieurs des revendications 18 à 22, **caractérisé en ce qu'**avant l'assemblage des divers éléments à la couche située en dessous, plusieurs éléments ou l'élément posé en dernier et à assembler sont pressés au niveau des éléments adjacents dans la couche.

24. Procédé de fabrication d'éléments composites selon l'une quelconque ou plusieurs des revendications 18 à 23, **caractérisé en ce que** l'élément est relié à la couche située en dessous au cours de la compression.

25. Procédé de fabrication d'éléments composites selon l'une quelconque ou plusieurs des revendications 18 à 24, **caractérisé en ce que** l'élément composite est ensuite usiné, par exemple est ébarbé ou découpé.
